# EUROPEAN PATENT APPLICATION

(11) **EP 3 905 501 A1**
(43) Date of publication of application: **03.11.2021**
(21) Application number: 18945231.1
(22) Date of filing: 28.12.2018
(51) Int. Cl.: H02M 3/28, H02J 7/00, H02J 7/02

(54) **STORAGE BATTERY DEVICE**

(71) Applicant: KABUSHIKI KAISHA TOSHIBA, Minato-ku Tokyo 105-8001 (JP)
(72) Inventor: KURODA, Kazuto, Kawasaki-shi, Kanagawa 212-0013 (JP); SEKINO, Masahiro, Kawasaki-shi, Kanagawa 212-0013 (JP); YAMASAKI, Hideo, Kawasaki-shi, Kanagawa 212-0013 (JP); OOSAWA, Takeshi, Kawasaki-shi, Kanagawa 212-0013 (JP); MASAOKA, Toshihiko, Kawasaki-shi, Kanagawa 212-0013 (JP)
(74) Representative: AWA Sweden AB
(86) International application number: PCT/JP2018/048600
(87) International publication number: WO 2020/136907

(57) **Abstract**

A storage battery device of an embodiment is to be mounted on a vehicle for power supply to an on-vehicle device, and includes: a first battery unit including battery cells connected in series between a first input output voltage charge-discharge terminal pair to supply low-voltage power via the first input output voltage charge-discharge terminal pair; a second battery unit connected in series to a high potential side of the first battery unit, including battery cells connected in series between the first battery unit and a second input output voltage charge-discharge terminal to supply high-voltage power in cooperation with the first battery unit via the first input output voltage charge-discharge terminal on a low potential side and the second input output voltage charge-discharge terminal; and a direct-current voltage converter that performs DC voltage conversion of a power supply from the second battery unit, to be able to supply power via the first input output voltage charge-discharge terminal pair. The storage battery device can thus simultaneously supply low-voltage power and high-voltage power with maintained reliability.

## Description

### FIELD

Embodiments of the present invention relate generally to a storage battery device.

### BACKGROUND

As for automobiles, in recent years studies have been made on heightening the in-vehicle power supply voltage applied to on-vehicle devices (auxiliary machines) and electric components from typical 12V to a higher voltage (36 to 48V) in view of increased power consumption of electric components and utilization of regenerative energy. For example, at a rated voltage of 48V, the in-vehicle voltage power supply system can increase the output and decrease current in use from the existing 12V system. Thus, part of the system can enhance efficiency.

Meanwhile, for the purpose of utilizing regenerative energy, use of lithium-ion batteries, i.e., compact-size, large-capacity storage elements capable of withstanding repetitions of charging and discharging, has been spread.

### CITATION LIST

### Patent Literature

Patent Literature 1: Japanese Laid-open Patent Application Publication No. 2009-277647
Patent Literature 2: Japanese Laid-open Patent Application Publication No. 2001-136735

### SUMMARY OF INVENTION

### PROBLEM TO BE SOLVED BY THE INVENTION

It requires, however, a long period of time to allow all of the on-vehicle devices and the electric components to be adapted to increased voltages, therefore, supply of both low-voltage power (12V power) and high-voltage power has been considered. In addition, the low-voltage power (12V power) is expected to be able to maintain required minimum safety functions of the vehicles.

In view of the above, an object of the present invention is to provide a storage battery device capable of simultaneously supplying low-voltage power and high-voltage power while maintaining reliability.

### MEANS FOR SOLVING PROBLEM

According to one embodiment, in general, a storage battery device is to be mounted on a vehicle to supply power to an on-vehicle device. The storage battery device includes a first battery unit including a plurality of battery cells connected in series between a pair of first input output voltage charge-discharge terminals, the first battery unit that supplies low-voltage power via the pair of first input output voltage charge-discharge terminals; a second battery unit connected in series to a high potential side of the first battery unit and including a plurality of battery cells connected in series between the first battery unit and a second input output voltage charge-discharge terminal, the second battery unit that supplies high-voltage power in cooperation with the first battery unit via the first input output voltage charge-discharge terminal on a low potential side and the second input output voltage charge-discharge terminal; and a direct-current voltage converter that performs direct-current voltage conversion of a power supply from the second battery unit, to be able to supply power via the pair of first input output voltage charge-discharge terminals.

### BRIEF DESCRIPTION OF DRAWINGS

FIG. 1 is a schematic structural block diagram of a vehicle storage battery system according to one embodiment;
FIG. 2 is a schematic block diagram of a configuration of a storage battery device;
FIG. 3 is a schematic diagram illustrating a configuration of a DC-DC converter; and
FIG. 4 is a processing flowchart according to an embodiment.

### DESCRIPTION OF EMBODIMENT

The following will describe embodiments in detail with reference to the accompanying drawings.

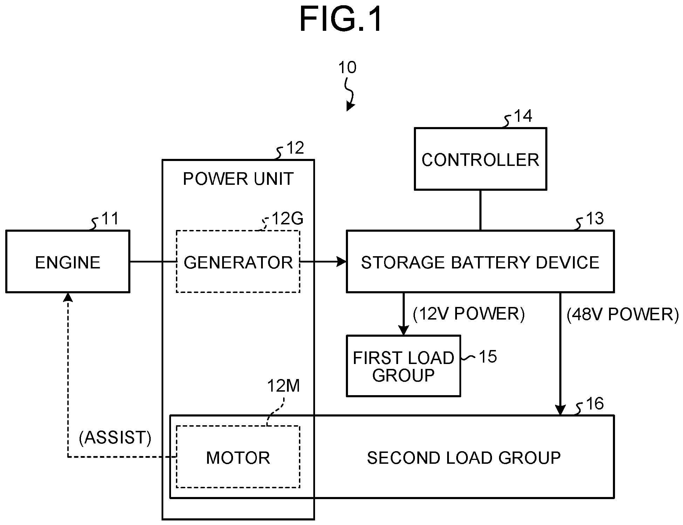

FIG. 1 is a schematic structural block diagram of a vehicle storage battery system of one embodiment.

A vehicle storage battery system 10 includes a power unit 12 functioning as a generator 12G when driven by an engine 11 to be able to generate power or functioning as an electric motor 12M when supplied with power to assist the driving of the engine 11; a storage battery device 13 that supplies power to on-vehicle devices; a controller 14 that measures a state of charge (voltage, charge current, and temperature) of the storage battery device 13 to control the storage battery device 13; a first load group 15 to be supplied with low-voltage power (e.g., 12V power) from the storage battery device 13; and a second load group 16 to be supplied with high-voltage power (e.g., 48V power) from the storage battery device 13.

In the structure described above, the power unit 12 functioning as the motor 12M is included in the second load group 16.

The following describes a configuration of the storage battery device 13.

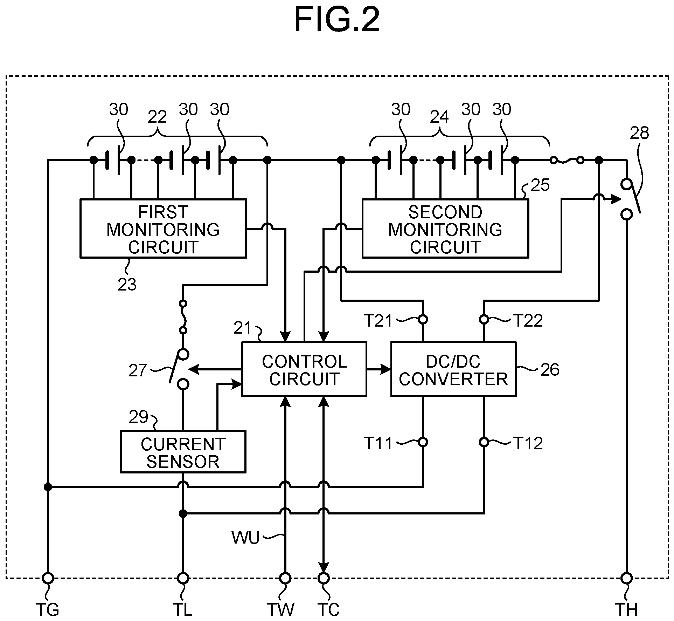

FIG. 2 is a schematic block diagram illustrating a configuration of the storage battery device.

The storage battery device 13 includes a control circuit 21 that controls the storage battery device 13 as a whole; a first battery unit 22 that mainly supplies the low-voltage power; a first monitoring circuit 23 that monitors a state (SOC, voltage, charge current, and temperature) of the first battery unit 22 and notifies the control circuit 21 of a result of the monitoring; a second battery unit 24 that supplies the high-voltage power in cooperation with the first battery unit 22; a second monitoring circuit 25 that monitors a state (SOC, voltage, charge current, and temperature) of the second battery unit 24 and notifies the control circuit 21 of a result of the monitoring; a direct-current/direct-current (DC/DC) converter 26 for DC/DC conversion having first input output terminals T11 and T12 connected to the first battery unit 22 and second input output terminals T21 and T22 connected to the second battery unit 24; a first breaker 27 that shuts off supply of the low-voltage power under the control of the control circuit 21; a second breaker 28 that shuts off supply of the high-voltage power under the control of the control circuit 21; a current sensor 29 that detects a flow of current via the first breaker 27; a ground terminal TG connected to a low-potential-side electrode of the first battery unit 22 and the first input output terminal T11; a low-voltage power supply terminal TL connected to one end of the first breaker 27 and the first input output terminal T12; a high-voltage power supply terminal TH connected to one end of the second breaker 28; a start signal terminal TW via which a start signal WU is input to the control circuit 21 from the controller 14, and a communication terminal TC for the control circuit 21 to communicate with the controller 14.

In the structure described above, the first battery unit 22 includes a plurality of battery cells 30 connected in series.

Likewise, the second battery unit 24 includes a plurality of battery cells 30 connected in series.

In this case, the rated output voltage of the first battery unit 22 is set to 12V and the rated output voltage of the second battery unit 24 is set to 36 V. Thus, the number of battery cells 30 connected in series in the second battery unit 24 is approximately three times larger than that in the first battery unit 22.

In such a structure, 12V power (low-voltage power) is supplied in-between the low-voltage power supply terminal TL and the ground terminal TG while 48V power (high-voltage power) is supplied in-between the high-voltage power supply terminal TH and the ground terminal TG.

In the structure described above, the battery cells 30 are preferably lithium-ion secondary batteries or nickel hydrogen secondary batteries because of their excellent output characteristics. In view of high mass energy density, the lithium-ion secondary batteries are more preferable than the nickel hydrogen secondary batteries.

Among the lithium-ion secondary batteries, the ones with a larger ratio of an operation voltage range with respect to the cell maximum voltage are more preferable for the battery cells 30. That is, lithium-ion secondary batteries having an iron phosphate based positive electrode and a carbon based negative electrode or having a positive electrode made of lithium 3d transition metal oxide (e.g., lithium manganese oxide, lithium nickelate oxide, and lithium cobalt oxide) and a negative electrode made of lithium titanate oxide are more preferable.

From another point of view, higher smoothness of the negative electrode potential in charging and discharging results in decreasing differences in potential among the cells, which leads to excellent controllability in terms of cross current and cell balancing. In this regard, the battery cells 30 are more preferably lithium-ion secondary batteries with a ternary (e.g., Li(Ni-Mn-Co)O₂) positive electrode formed by substituting nickel and manganese for part of the lithium 3d transition metal oxide (e.g., lithium manganese oxide, lithium nickelate oxide, and lithium cobalt oxide), and a negative electrode made of lithium titanate oxide (e.g., Li₄Ti₅O₁₂).

The configuration of the battery cells 30 is now described in more detail.

In the following, the battery cells 30 are represented as lithium-ion battery cells by way of example.

Each battery cell 30 according to a first aspect is formed as a non-aqueous electrolyte secondary battery. The battery cell 30 has a positive electrode including a positive-electrode active material containing layer containing a lithium metal compound including at least one metal element selected from a group of cobalt, nickel, and manganese, where the lithium metal compound is expressed as LiₐNi_{b}Co_{c}Mn_{d}O₂ (where mole ratios a, b, c, and d satisfy the relations 0 ≤ a ≤ 1.1 and b + c + d = 1); a negative electrode containing metal composite oxide containing titanium; and a non-aqueous electrolyte containing non-aqueous solvent.

Each battery cell 30 according to a second aspect is formed as a non-aqueous electrolyte secondary battery. The battery cell 30 has a positive electrode including a positive-electrode active material containing layer containing a lithium metal compound including at least one metal element selected from a group of cobalt, nickel, and manganese, where the lithium metal compound is expressed as LiₐNi_{b}Co_{c}Mn_{d}O₄ (where mole ratios a, b, c, and d satisfy the relations 0 ≤ a ≤ 1.1 and b + c + d = 2); a negative electrode containing metal composite oxide containing titanium; and a non-aqueous electrolyte containing non-aqueous solvent.

To form the battery cell 30 according to the first and the second aspects, it is preferable that the average particle diameter of primary particles of the lithium titanium oxide be equal to or smaller than 1 µm and the specific surface area of the negative electrode layer by the BET method be in the range of 3 to 50 m²/g.

Further, the lithium titanium oxide may be preferably expressed as Li₄₊ₓTi₅O₁₂ (where -1 ≤ x ≤ 3) or Li₂₊ₓTi₃O₇ (where -1 ≤ x ≤ 3).

In addition, the metal composite oxide containing titanium may preferably contain Ti and at least one metal element selected from a group of P, V, Sn, Cu, Ni, and Fe.

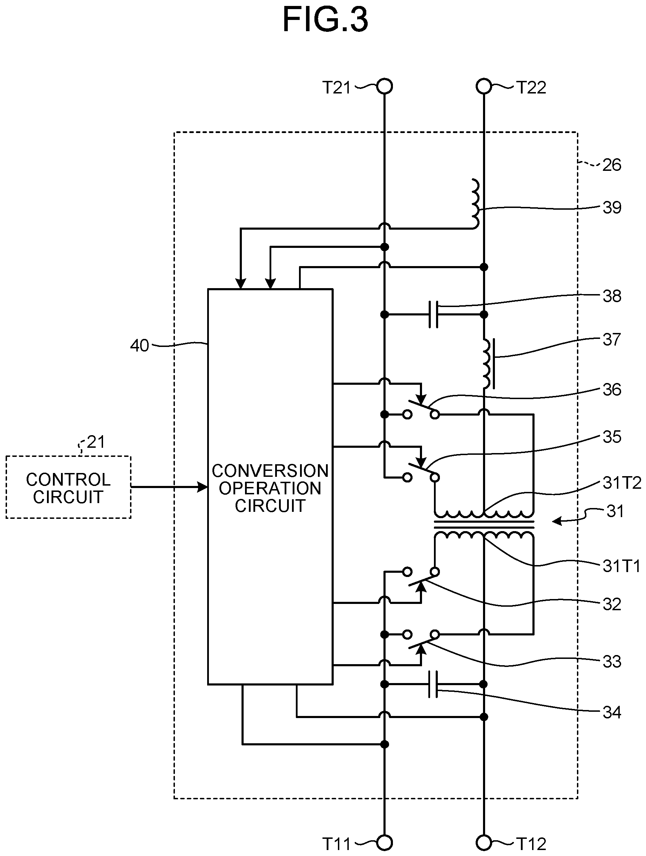

FIG. 3 is a schematic diagram illustrating a configuration of the DC-DC converter.

The DC/DC converter 26 is a push-pull insulated DC-DC converter and includes an isolation transformer 31.

A first input output terminal T12 is connected to a first intermediate tap 31T1 on the primary winding side of the isolation transformer 31. The first input output terminal T12 is to be connected to the first battery unit 22. One end of the primary winding is connected to one end of a first switch 32. The other end of the primary winding is connected to one end of a second switch 33.

The other end of the first switch 32 and the other end of the second switch 33 are both connected to the first input output terminal T11.

A capacitor 34 for current stabilization is connected in-between the first input output terminals T11 and T12.

A second input output terminal T22 is connected to a second intermediate tap 31T2 on the secondary winding side of the isolation transformer 31. The second input output terminal T22 is to be connected to the second battery unit 24. One end of the secondary winding is connected to one end of a third switch 35. The other end of the secondary winding is connected to one end of a fourth switch 36.

The other end of the third switch 35 and the other end of the fourth switch 36 are both connected to the second input output terminal T21.

In addition, a coil 37 is connected at one end to the second intermediate tap 31T2 and at the other end to the second input output terminal T22.

A capacitor 38 is connected between the connection point of the coil 37 and the second input output terminal T21 and the second input output terminal T22. The capacitor 38 functions as a low-pass filter in cooperation with the coil 37.

The DC/DC converter 26 further includes a current sensor 39 that detects an output current to the second battery unit 24, and a conversion operation circuit 40 that controls the first switch 32 to the fourth switch 36 for DC/DC conversion in accordance with a control signal from the control circuit 21, a detected voltage of the first battery unit 22, a detected voltage of the second battery unit 24, and the output current to the second battery unit 24 detected by the current sensor 39.

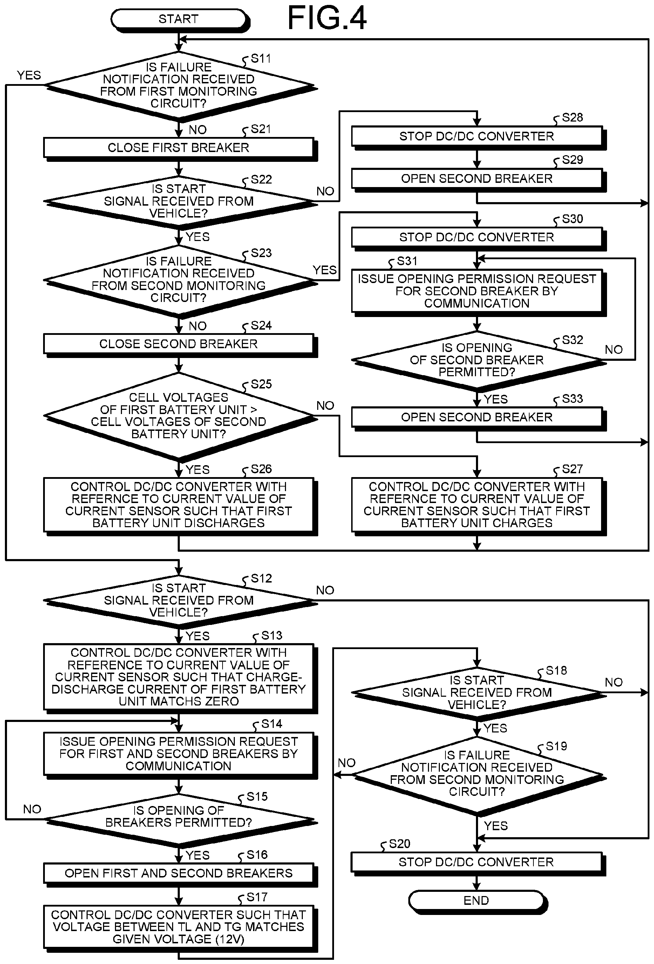

FIG. 4 is a processing flowchart according to an embodiment.

The control circuit 21 determines receipt or non-receipt of a failure notification from the first monitoring circuit 23 (step S11). The failure notification represents that the first battery unit 22 is in a faulty state.

After determining receipt of the failure notification representing the first battery unit 22 being in a faulty state from the first monitoring circuit 23 at step S11 (Yes at step S11), the control circuit 21 determines receipt or non-receipt of a start signal WU from an ECU (not illustrated) located on a vehicle body (step S12) .

After determining non-receipt of the start signal WU from the ECU (not illustrated) on the vehicle body (No at step S12), the control circuit 21 causes the DC/DC converter 26 to stop (step S20), ending the processing.

After determining receipt of the start signal WU from the ECU (not illustrated) on the vehicle body at step S12, (Yes at step S12), the control circuit 21 controls the DC/DC converter 26 with reference to the current value of the current sensor such that the charge-discharge current of the first battery unit 22 matches zero (step S13).

The control circuit 21 issues an opening permission request as to the first breaker 27 and the second breaker 28 to the controller 14 in order to shut off a power supply from the first battery unit 22 and the second battery unit 24 (step S14). In the imminent situation that the cell voltage and cell temperature are running into a dangerous state, the control circuit 21 immediately causes the first breaker 27 and the second breaker 28 to open without issuing an opening permission request.

The control circuit 21 determines whether the controller 14 has permitted a breaker opening (step S15).

After determining that the controller 14 has not permitted a breaker opening at step S15 (No at step S15), the control circuit 21 returns to step S14 and enters a waiting state.

After determining that the controller 14 has permitted a breaker opening at step S15 (Yes at step S15), the control circuit 21 causes the first breaker 27 and the second breaker 28 to open (step S16).

The control circuit 21 then controls the DC/DC converter 26 such that the voltage between the low-voltage power supply terminal TL and the high-voltage power supply terminal TH tube coincides with a given voltage (12V in the present embodiment) (step S17).

The control circuit 21 determines receipt or non-receipt of the start signal WU from the ECU (not illustrated) on the vehicle body (step S18).

After determining non-receipt of the start signal WU from the ECU (not illustrated) on the vehicle body at step S18 (No at step S12), the control circuit 21 causes the DC/DC converter 26 to stop (step S20), ending the processing.

After determining receipt of the start signal WU from the ECU (not illustrated) on the vehicle body at step S18 (Yes at step S18), the control circuit 21 determines receipt or non-receipt of the failure notification from the second monitoring circuit 25 (step S19).

After determining non-receipt of the failure notification from the second monitoring circuit 25 at step S19 (No at step S19), the control circuit 21 returns to step S18 to continue the supply of the low-voltage power.

After determining receipt of the failure notification from the second monitoring circuit 25 at step S19 (Yes at step S19), the control circuit 21 causes the DC/DC converter 26 to stop (step S20), ending the processing.

After determining non-receipt of the failure notification representing that the first battery unit 22 is in a faulty state from the first monitoring circuit 23 at step S11 (No at step S11), the control circuit 21 causes the first breaker 27 to close (step S21).

The control circuit 21 then determines receipt or non-receipt of the start signal WU from the ECU (not illustrated) on the vehicle body (step S22).

After determining receipt of the start signal WU from the ECU (not illustrated) on the vehicle body at step S22 (Yes at step S22), the control circuit 21 determines receipt or non-receipt of a failure notification representing the second battery unit 24 being in a faulty state from the second monitoring circuit 25 (step S23).

After determining non-receipt of the failure notification representing the second battery unit 24 being in a faulty state from the second monitoring circuit 25 at step S23 (No at step S23), the control circuit 21 causes the second breaker 28 to close (step S24).

The control circuit 21 acquires the cell voltages of the battery cells included in the first battery unit 22 from the first monitoring circuit 23 and the cell voltages of the battery cells included in the second battery unit 24 from the second monitoring circuit 25, to determine through comparison whether the battery cells of the first battery unit 22 are higher in cell voltage than the battery cells of the second battery unit 24 (step S25).

After determining that the battery cells of the first battery unit 22 are higher in cell voltage than the battery cells of the second battery unit 24 at step S25 (Yes at step S25), the control circuit 21 causes the first battery unit 22 to discharge stored power via the first input output terminals T11 and T12 and controls the DC/DC converter 26 to perform DC/DC conversion of the discharged power while monitoring the current amount detected by the current sensor, to charge the second battery unit 24 via the second input output terminals T21 and T22 (step S26). The control circuit 21 then returns to step S11 again.

As a result, the power from the first battery unit 22 is subjected to DC/DC conversion and supplied to the second battery unit 24. Thereby, the cell voltages of the battery cells of the first battery unit 22 match the cell voltages of the battery cells of the second battery unit 24, achieving cell balancing.

After determining that the cell voltages of the battery cells of the first battery unit 22 are equal to or lower than the cell voltages of the battery cells of the second battery unit 24 (No at step S25), the control circuit 21 causes the second battery unit 24 to discharge stored power via the second input output terminals T21 and T22. The control circuit 21 then controls the DC/DC converter 26 to perform DC/DC conversion of the discharged power while monitoring the current amount detected by the current sensor, to charge the first battery unit 22 via the first input output terminals T11 and T12 (step S27). The control circuit 21 returns to step S11 again.

As a result, the power from the second battery unit 24 is subjected to DC/DC conversion and supplied to the first battery unit 22 to charge the first battery unit 22. Thereby, the cell voltages of the battery cells of the first battery unit 22 match the cell voltages of the battery cells of the second battery unit 24, achieving cell balancing (a state that the difference in charge rate among the battery cells is equal to or smaller than a given referential difference).

After determining receipt of the failure notification representing the second battery unit 24 being in a faulty state from the second monitoring circuit 25 at step 23 (Yes at step S23), the control circuit 21 causes the DC/DC converter 26 to stop (step S30).

The control circuit 21 issues an opening permission request as to the second breaker 28 to the controller 14 in order to shut off the power supply from the second battery unit 24 (step S31). In the imminent situation that the cell voltage and cell temperature are running into a dangerous state, the control circuit 21 immediately causes the second breaker 28 to open without issuing an opening permission request.

The control circuit 21 then determines whether the controller 14 has permitted the opening of the second breaker 28 (step S32).

After determining that the controller 14 has not permitted the breaker opening at step S32 (No at step S32), the control circuit 21 returns to step S31 and enters a waiting state.

After determining that the controller 14 has permitted the breaker opening at step S32 (Yes at step S32), the control circuit 21 causes the second breaker 28 to open (step S33), and returns to step S11. Note that with the second breaker 28 opened, the supply of the low-voltage power is still feasible.

After determining non-receipt of the start signal from the ECU (not illustrated) on the vehicle body at step S22 (No at step S22), the control circuit 21 causes the DC/DC converter 26 to stop (step S28) and the second breaker 28 to open (or maintain the second breaker 28 in the open state) (step S29). The control circuit 21 then returns to step S11 again.

Consequently, the storage battery device 13 supplies the low-voltage power (e.g., 12V power) to the first load group 15 to be ready for driving. However, without being supplied with high-voltage power (e.g., 48V power) from the storage battery device 13, the second load group 16 discharges the power to be supplied to the first load group being a low-voltage load via the first breaker 27, the low-voltage power supply terminal TL, and the ground terminal TG.

The following will describe a normal operation of the battery storage device.

The normal operation includes three operations as follows:
(1) Discharging operation of the first battery unit 22;
(2) Simultaneous discharging operation of the first battery unit 22 and the second battery unit 24; and
(3) Simultaneous charging operation of the first battery unit 22 and the second battery unit 24.

In the following description, the first breaker 27 and the second breaker 28 are initially set in the open state (OFF state) for easier understanding.

First, the discharging operation of the first battery unit 22 is described.

To cause the first battery unit 22 to discharge, the control circuit 21 places the first breaker 27 in the closed state (ON state) by the control signal.

As a result, the first battery unit 22 discharges stored power to be supplied to the low voltage load via the first breaker 27, the low-voltage power supply terminal TL, and the ground terminal T.

Next, the simultaneous discharging operation of the first battery unit 22 and the second battery unit 24 is described.

To cause the first battery unit 22 and the second battery unit 24 to simultaneously discharge, the control circuit 21 places the second breaker 28 in the closed state (ON state) by the control signal.

Consequently, the first battery unit 22 and the second battery unit 24 discharge stored power to be supplied to the high-voltage load via the second breaker 28, the high-voltage power supply terminal TH, and the ground terminal TG.

The simultaneous charging operation of the first battery unit 22 and the second battery unit 24 is now described.

In this case, all of the battery cells included in the first battery unit 22 and the second battery unit 24 are assumed to be in a cell balanced state (that the difference in charge rate among the battery cells is equal to or smaller than a given referential difference).

To cause the first battery unit 22 and the second battery unit 24 to simultaneously charge, the control circuit 21 places the second breaker 28 in the closed state (ON state) by the control signal.

Thereby, the first battery unit 22 and the second battery unit 24 are simultaneously charged with the power generated by the generator as a result of driving the engine, via the high-voltage power supply terminal TH, the second breaker 28, and the ground terminal TG.

According to the present embodiment as described above, it is made possible to simultaneously supply the low-voltage power and the high-voltage power. Further, in the event that the first battery unit 22 becomes unable to supply the low-voltage power, the second battery unit 24 can supply the low-voltage power via the direct-current voltage converter instead, thereby enhancing the reliability of the low-voltage power supply.

In addition, it is made possible to adjust the cell balance among the battery cells of both the first battery unit 22 and the second battery unit 24 in order to resolve the cell imbalance arising from the difference in frequency in use between the first battery unit 22 and the second battery unit 24. This leads to ensuring the charge-discharge performance of the storage battery device in a longer period of time.

In view of the fact that only the first battery unit 22 serves to supply the power while the automobile is stopping (not in use), in practice the rechargeable-dischargeable battery capacity of the first battery unit 22 is preferably set to higher than that of the second battery unit 24.

The program to be executed by the storage battery device in the present embodiment is recorded and provided in an installable or executable file format on a computer-readable recording medium such as a CD-ROM, a digital versatile disc (DVD), and a semiconductor storage device such as a USB memory.

The program to be executed by the storage battery device in the present embodiment may be stored in a computer connected to a network such as the Internet and provided by being downloaded via the network. The program to be executed by the storage battery device in the embodiment may be provided or distributed via a network such as the Internet.

The program to be executed by the storage battery device in the present embodiment may be incorporated and provided in a ROM, for example.

While certain embodiments have been described, these embodiments have been presented by way of example only, and are not intended to limit the scope of the inventions. Indeed, the novel methods and systems described herein may be embodied in different other forms; furthermore, various omissions, substitutions and varies in the form of the methods and systems described herein may be made without departing from the spirit of the inventions. The accompanying claims and their equivalents are intended to cover such forms or modifications as would fall within the scope and spirit of the inventions.

## Claims

1. A storage battery device to be mounted on a vehicle to supply power to an on-vehicle device, the storage battery device comprising:
a first battery unit comprising a plurality of battery cells connected in series between a pair of first input output voltage charge-discharge terminals, the first battery unit that supplies low-voltage power via the pair of first input output voltage charge-discharge terminals;
a second battery unit connected in series to a high potential side of the first battery unit and comprising a plurality of battery cells connected in series between the first battery unit and a second input output voltage charge-discharge terminal, the second battery unit that supplies high-voltage power in cooperation with the first battery unit via the first input output voltage charge-discharge terminal on a low potential side and the second input output voltage charge-discharge terminal; and
a direct-current voltage converter that performs direct-current voltage conversion of a power supply from the second battery unit, to be able to supply power via the pair of first input output voltage charge-discharge terminals.

2. The storage battery device according to claim 1, further comprising:
a control device that places the direct-current voltage converter in an operation state in response to input of a start signal from the vehicle, and places the direct-current voltage converter in a stop state in response to no input of the start signal, the start signal representing an instruction for power supply.

3. The storage battery device according to claim 2, wherein
the control device converts the direct-current voltage of the power supply from the second battery unit in response to detection of an output incapable state of the first battery unit, to supply the low-voltage power via the pair of first input output voltage charge-discharge terminals in place of the first battery unit.

4. The storage battery device according to any one of claims 1 to 3, wherein
a chargeable-dischargeable battery capacity of the first battery unit is set to larger than a chargeable-dischargeable battery capacity of the second battery unit.
